# EUROPÄISCHE PATENTSCHRIFT

(11) **EP 1 571 045 B1**
(45) Veröffentlichungstag und Bekanntmachung des Hinweises auf die Patenterteilung: **10.05.2006**
(21) Anmeldenummer: 05001085.9
(22) Anmeldetag: 20.01.2005
(51) Int. Cl.: B60R 11/02, F16M 11/40, F16M 13/02

(54) **Geräteträger mit biegbarem Tragarm**
Apparatus holder with bendable support arm
Porte appareillage avec bras de support pliable

(30) Priorität: 02.03.2004 DE 102004010031
(43) Veröffentlichungstag der Anmeldung: 07.09.2005
(73) Patentinhaber: Richter, Harald, 75331 Engelsbrand (DE)
(72) Erfinder: Richter, Harald, 75331 Engelsbrand (DE)
(74) Vertreter: Gallo, Wolfgang

(56) Entgegenhaltungen:
- DE-U- 29 513 581
- DE-U1- 20 316 061
- DE-U1- 29 912 772

## Beschreibung

Die Erfindung betrifft einen Geräteträger zur Verwendung beispielsweise in Kraftfahrzeugen zur dauernden oder zeitweiligen Halterung eines Geräts wie beispielsweise eines Mobiltelefons, eines Navigationsgeräts, oder dergleichen, wobei der Geräteträger aus einem Befestigungsteil wie beispielsweise einem Saugermechanismus zum Anbringen an einer glatten Fläche wie beispielsweise der Windschutzscheibe oder mit einer beispielsweise an einer Konsole anschraubbaren Sockelplatte, weiter aus einem Gerätehalter zur Aufnahme und Fixierung des betreffenden Geräts, und aus einem zwischen dem Befestigungsteil und dem Gerätehalter verlaufenden biegsamen Tragarm besteht, so daß durch entsprechendes Biegen des Tragarms die Gerätehalter in die vom Benutzer gewünschte optimale Gebrauchsposition orientierbar ist.

Solche Gerätehalter sind bereits bekannt, beispielsweise aus dem deutschen Gebrauchsmuster 295 13 581, welches auch die Merkmale des Oberbegriffs des Anspruchs 1 zeigt.

Bei den bekannten Geräteträger besteht der Tragarm aus einem biegsamen Metalldraht, dessen Biegung im Wege einer im wesentlichen unelastischen bleibenden Verformung erfolgt, und einem lose darüber angeordneten Mantelrohr beispielsweise in Gestalt eines elastisch biegbaren Kunststoffwellrohrs. Dabei hat das Mantelrohr keine technische Funktion, sondern dient lediglich der optisch ansprechenden Verkleidung des biegsamen Drahts. An seinen Enden ist der biegsame Draht jeweils mit einer Kunststoffhülse verbunden, die ihrerseits mit einer entsprechenden Muffe am Befestigungsteil bzw. am Gerätehalter verbunden wird.

Das Problem dabei stellt die einfache, kostengünstige und haltbare Verbindung zwischen dem Drahtende und der Kunststoffhülse dar. Da eine haltbare, insbesondere verdrehsichere Verklebung zwischen dem runden Draht und der Kunststoffhülse nicht möglich ist, ist der runde Draht an jedem Ende in eine Rechteckquerschnittsform gepresst und in ein entsprechend geformtes Rechteckdurchgangsloch in der Kunststoffhülse durchgesteckt und darin verklebt. Zur Sicherheit gegen axiales Herausziehen erhält das geringfügig über das Durchgangsloch der Kunststoffhülse überstehende Drahtende noch durch einen Schlag eine plastische Verformung zur Herstellung einer Formschlusssicherung.

Aufgabe der Erfindung ist es, einen Geräteträger der genannten Art so auszubilden, daß der biegsame Tragarm weniger arbeitsaufwendig und kostenintensiv gefertigt werden kann.

Diese Aufgabe wird gemäß der Erfindung durch die im Anspruch 1 angegebene Anordnung gelöst. Vorteilhafte Ausgestaltungen der Erfindung sind Gegenstand der Unteransprüche.

Die Erfindung wird nachstehend unter Bezugnahme auf die anliegende Zeichnung mehr im einzelnen beschrieben. Diese zeigt in schematischer Darstellung teilweise aufgeschnitten und abgebrochen einen Gerätehalter nach der Erfindung.

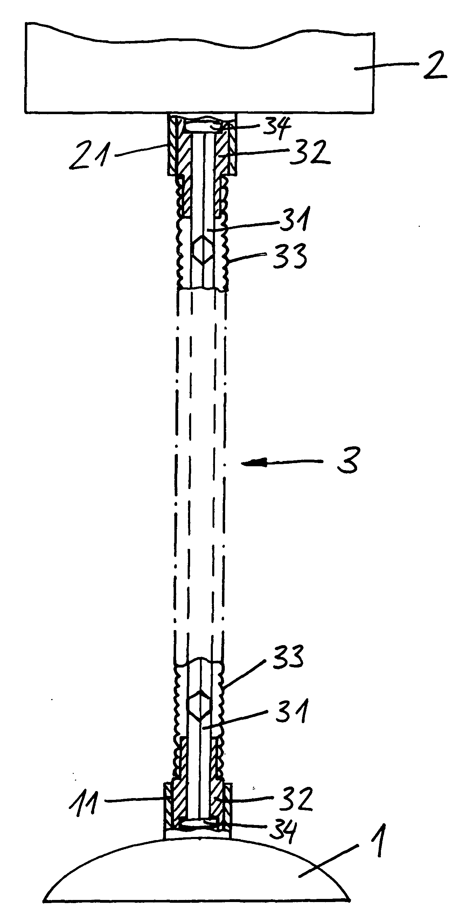

Der in der Zeichnung dargestellte Geräteträger besteht aus einem Befestigungsteil 1, das nur sehr schematisch als Sauger dargestellt ist, einem Geräteträger 2, der abgebrochen dargestellt ist, und einem diese miteinander verbindenden biegsamen Tragarm 3.

Der Tragarm 3 besteht aus einem im wesentlichen unelastisch bleibend biegbaren Metalldraht 31, der aus einer entsprechenden Aluminiumlegierung bestehen kann, dessen Querschnitt so gewählt ist, daß er einerseits die notwendige mechanische Festigkeit hat, andererseits sich mit zwar einigem, aber nicht übermäßigen Kraftaufwand in die gewünschte Verlaufsform biegen läßt, ohne diese gewünschte Verlaufsform bei nur leichter versehentlicher Berührung zu verändern, weiter aus an den beiderseitigen Enden angeordneten Endhülse 32 aus Kunststoff, die der Verbindung des Tragarms 3 mit dem Befestigungsteil 1 bzw. dem Gerätehalter 2 dient, und einem Kunststoffwellschlauch 33, der lediglich der optisch ansprechenden Verkleidung des biegsamen Metalldrahts 31 dient und auf zylindrische Hälse der Endhülsen 32 aufgeschoben ist.

Die Besonderheit des Tragarms 3 besteht darin, daß der Querschnitt des Metalldrahts polygonförmig ist, insbesondere sechseckförmig, also nicht rund, und daß die Aufnahmeöffnung in der jeweiligen Endhülse 32 eine entsprechende Querschnittsform hat, so daß eine drehfeste Formschlussverbindung zwischen dem Metalldraht und der jeweiligen Endhülse hergestellt ist. Ein kurzer Überstand des Metalldrahts über die Aufnahmeöffnung der Endhülse 32 ist zu einem abgeflachten Quetschkörper 34 verformt und verhindert ein axiales Herausrutschen des Metalldrahts aus der Endhülse, der zusätzlich auch in der Endhülse verklebt ist.

Am Außenumfang ist jede Endhülse 32 geriffelt, um sie wiederum Zuhilfenahme einer Verklebung straff und mit Vorspannung in eine entsprechende Aufnahmemuffe 11 bzw. 21 des Befestigungsteils 1 bzw. des Gerätehalters 2 einsetzen zu können.

## Patentansprüche

1. Geräteträger, bestehend aus einem Befestigungsteil (1) zum Anbringen an einer Wand oder einem Bauteil, weiter aus einem Gerätehalter (2) zur Aufnahme und Fixierung eines Geräts, und aus einem zwischen dem Befestigungsteil und dem Gerätehalter verlaufenden biegsamen Tragarm, wobei der Tragarm aus einem im wesentlichen unelastisch biegsamen Metalldraht (31) besteht, dessen beiden Enden jeweils in einer Endhülse (32) gefasst und über diese Endhülse mit dem Befestigungsteil bzw. dem Gerätehalter verbunden sind, **dadurch gekennzeichnet, daß** der Querschnitt des Metalldrahts (31) polygonförmig, insbesondere sechseckförmig, ist und die Endhülsen (32) jeweils eine axiale Aufnahmeöffnung für den Metalldraht mit zu dessen Polygonform komplementärer Querschnittsform haben, durch welche jede Endhülse drehfest formschlüssig mit dem Metalldraht verbunden ist.

2. Geräteträger nach Anspruch 1, wobei ein axialer Überstand des Metalldrahts über die axiale Aufnahmeöffnung der Endhülse (32) zur axialen Verriegelung mit der Endhülse plastisch verformt ist.

3. Geräteträger nach Anspruch 1 oder 2, wobei Metalldraht und Endhülsen jeweils zusätzlich miteinander verklebt sind.

4. Geräteträger nach einem der Ansprüche 1 bis 3, wobei zwischen den beiden Endhülsen (32) ein Verkleidungsrohr, insbesondere Kunststoffwellrohr, zur Verkleidung des Metalldrahts verläuft.

5. Geräteträger nach Anspruch 4, wobei die Enden des Verkleidungsrohrs (33) auf zylindrische Halsansätze der Endhülsen (32) aufgeschoben oder in entsprechende Muffenöffnungen derselben eingesteckt sind.

6. Geräteträger nach einem der Ansprüche 1 bis 6, wobei die Endhülsen (32) aus Kunststoff bestehen.

## Claims

1. Device mount, consisting of a fixing part (1) for mounting on a wall or on a component, and further consisting of a device holder (2) for receiving and fixing a device, and of a flexible support arm extending between the fixing part and the device holder, the support arm consisting of a substantially non-elastically flexible metal wire (31), both ends of which are held in a respective end sleeve (32) and are respectively connected to the fixing part and to the device holder via said end sleeve, **characterized in that** the cross-section of the metal wire (31) is of a polygonal form, in particular a hexagonal form, and the end sleeves (32) have a respective axial receiving aperture for the metal wire, said receiving aperture being of a cross-sectional form that is complementary to the polygonal form of said metal wire, through which receiving aperture each end sleeve is positively connected in a torsionally rigid manner to the metal wire.

2. Device mount according to claim 1, wherein an axial projection of the metal wire over the axial receiving aperture of the end sleeve (32) is plastically deformed for the purpose of axial fastening to the end sleeve.

3. Device mount according to claim 1 or 2, wherein the metal wire and end sleeves are in addition respectively bonded to each other.

4. Device mount according to any one of claims 1 to 3, wherein a covering tube, in particular a corrugated plastic tube, extends between the two end sleeves (32) for the purpose of covering the metal wire.

5. Device mount according to claim 4, wherein the ends of the covering tube (33) are slipped onto cylindrical neck projections of the end sleeves (32) or are inserted into corresponding coupling apertures of same.

6. Device mount according to any one of claims 1 to 6, wherein the end sleeves (32) are composed of plastic.

## Revendications

1. Porte-appareil, comprenant une partie de fixation (1) destinée à être posée sur une paroi ou un élément de construction, un support d'appareil (2) destiné à recevoir et à fixer un appareil et un bras de support flexible s'étendant entre la partie de fixation et le support d'appareil, ledit bras de support étant constitué d'un fil métallique (31) flexible essentiellement de manière non élastique, dont les deux extrémités sont prises chacune dans une douille d'extrémité (32) et sont reliées par l'intermédiaire de cette douille d'extrémité à la partie de fixation, respectivement au support d'appareil, **caractérisé en ce que** la section du fil métallique (31) est de forme polygonale, en particulier hexagonale, et les douilles d'extrémité (32) ont chacune une ouverture de logement axiale pour le fil métallique ayant une forme de section complémentaire à la forme polygonale du fil métallique, par laquelle chaque douille d'extrémité est reliée au fil métallique avec correspondance de forme de manière résistant à la rotation.

2. Porte-appareil selon la revendication 1, un dépassement axial du fil métallique au-delà de l'ouverture de logement axiale de la douille d'extrémité (32) étant déformé plastiquement pour le verrouillage axial avec la douille d'extrémité.

3. Porte-appareil selon la revendication 1 ou 2, le fil métallique et les douilles d'extrémité étant collés ensemble en supplément.

4. Porte-appareil selon l'une des revendications 1 à 3, un tube d'habillage, en particulier un tube ondulé en matière plastique, s'étendant entre les deux douilles d'extrémité (32) pour habiller le fil métallique.

5. Porte-appareil selon la revendication 4, les extrémités du tube d'habillage (33) étant enfoncées sur les embouts à col cylindriques des douilles d'extrémité (32) ou introduites dans des ouvertures de manchon correspondantes de celles-ci.

6. Porte-appareil selon l'une des revendications 1 à 6, les douilles d'extrémité (32) étant réalisées en matière plastique.
